# EUROPÄISCHE PATENTSCHRIFT

(11) **EP 0 472 896 B1**
(45) Veröffentlichungstag und Bekanntmachung des Hinweises auf die Patenterteilung: **07.12.1994**
(21) Anmeldenummer: 91112183.8
(22) Anmeldetag: 20.07.1991
(51) Int. Cl.: C08G 18/40, C08G 18/48, C08G 18/66

(54) **Verfahren zur Herstellung von hochelastischen Polyurethan-Weichschaumstoffen und deren Verwendung als Polstermaterial**
Process for the preparation of highly elastic, flexible polyurethane foams and their use as cushioning material
Procédé pour la préparation de mousses flexibles hautement élastiques et leur utilisation comme matériau de rembourrage

(30) Priorität: 03.08.1990 DE 4024669
(43) Veröffentlichungstag der Anmeldung: 04.03.1992
(73) Patentinhaber: BAYER AG, 51368 Leverkusen (DE)
(72) Erfinder: Hettel, Hans, Dr., W-5064 Rösrath (DE); Haas, Peter, Dr., W-5657 Haan 1 (DE)

(56) Entgegenhaltungen:
- EP-A- 0 062 784
- EP-A- 0 322 912
- DE-A- 2 728 031
- US-A- 4 098 729

## Beschreibung

Polyurethan-Weichschaumstoffe mit hoher Elastizität (HR-Schaumstoffe) werden aus Polyolen mit überwiegend primären Hydroxylgruppen, Polyisocyanaten, Wasser, organischen Treibmitteln, Aktivatoren sowie Vernetzern hergestellt. Als Vernetzer haben sich Alkanolamine wie Diethanolamin, Triethanolamin, jedoch auch aminfreie, niedermolekulare Polyhydroxyverbindungen wie Glycerin, Pentaerythrit, Sorbit, Mannit sowie Dulcit bewährt. Diese Produkte sind z.B. in der DE-A-2 728 031 oder in der US-A-4 883 825 beschrieben worden. Die Verwendung dieser Vernetzer zur Herstellung von HR-Schaumstoffen ist somit an sich Stand der Technik. In der US-A-4 883 825 wird auch die Verwendung bestimmter Kombinationen von Diethanolamin und Polyhydroxykomponenten als Vernetzer für HR-Formschaumstoffe niedriger Rohdichte beschrieben.

Zur Herstellung von Blockschaumstoffen geringer Stauchhärte wurden bisher bestimmte Anteile an Treibmitteln vom Typ der Fluorchlorkohlenwasserstoffe mitverwendet, wobei es sich hauptsächlich um das Fluortrichlormethan handelte. Diese Stoffklasse ist jedoch ökologisch nicht unbedenklich. Aufgabe der vorliegenden Erfindung war die Herstellung weicher HR-Blockschaumstoffe über einen weiten Rohdichtebereich und ohne Verwendung von Fluorchlorkohlenwasserstoffen. Es wurde nämlich überraschend gefunden, daß zur Herstellung weicher hochelastischer Blockschaumstoffe die Art der Dosierung der Vernetzerspecies von außerordentlicher Wichtigkeit ist, um einen stabilen Schaum mit dem angestrebten Eigenschaftsprofil zu erhalten.

Gegenstand der Erfindung ist ein Verfahren zur Herstellung von hochelastischen Polyurethan-Weichschaumstoffen durch Umsetzung von
a) Polyisocyanaten mit
b1) mindestens zwei gegenüber Isocyanaten aktive Wasserstoffatome aufweisenden Polyethern vom Molekulargewicht 400 bis 10 000,
und gegebenenfalls
b2) bis 50 Gew.-%, bezogen auf (b1 + b2), polymermodifizierten Polyolen ausgewählt aus
b2.1) Dispersionen von Polymere enthaltenden höhermolekularen Hydroxylverbindungen, die durch Umsetzung von Mono- und/oder Polyisocyanaten mit primäre und/oder sekundäre Aminogruppen aufweisenden Polyaminen und/oder Hydrazinen und/oder Hydrazinen und/oder Alkanolaminen in einer 1 bis 8 primäre und/oder sekundäre Hydroxylgruppen aufweisenden Verbindung mit einem Molekulargewicht von 400 bis 10 000 hergestellt worden sind,
b2.2) Dispersionen von Reaktionsprodukten von Polyisocyanaten und Alkanolaminen in Polyethern,
b2.3) Dispersionen von Homo- oder Copolymerisaten von ungesättigten Monomeren wie Styrol oder Acrylnitril in Polyethern
wobei der Füllstoffanteil von b2), bezogen auf (b1 + b2), 1 bis 6 Gew.-% beträgt,
in Gegenwart von
c) Wasser und
d) Verbindungen mit mindestens zwei gegenüber Isocyanaten reaktionsfähigen Wasserstoffatomen mit einem Molekulargewicht von 32 bis 399 als Vernetzer und gegebenenfalls
e) Katalysatoren sowie gegebenenfalls in Gegenwart von
f) an sich bekannten oberflächenaktiven und flammhemmenden Zusatzstoffen und weiteren an sich bekannten Hilfsmitteln,
dadurch gekennzeichnet,
daß als Treibmittel c) und Vernetzer d) eine wäßrige Lösung eines I.) Alkanolamins und eines II.) aminfreien Polyols verwendet wird.

Erfindungsgemäß bevorzugt ist, daß
- als Vernetzerkomponente I) Diethanolamin und als Vernetzerkomponente II) Sorbit verwendet wird,
- I) und II) gemeinsam in das Reaktionsgemisch, bevorzugt unter Hochdruck, appliziert werden und daß
- im Kennzahlbereich 70 bis 110, bevorzugt 80 bis 100, gearbeitet wird.

Für die Durchführung des erfindungsgemäßen Verfahrens wird in der Regel die Vernetzerkomponente I) in Mengen von 0,2-5,0 Gew.-Tln., bevorzugt von 0,2-3,0 Gew.-Tln., besonders bevorzugt von 0,5-1,5 Gew.-Tln., (bezogen auf 100 Gew.-Tln. der Polyetherkomponente b)) und die Vernetzerkomponente II) in Mengen von 0,2-5,0 Gew.-Tln. bevorzugt von 0,2-3,0 Gew.-Tln., besonders bevorzugt 0,5-1,5 Gew.-Tln., (ebenfalls bezogen auf 100 Gew.-Tle. der Polyetherkomponente b)) eingesetzt.

Beide Komponenten werden in Form einer gemeinsamen wäßrigen Lösung verwendet.

Die Erfindung betrifft auch die Verwendung der hochlelastischen Polyurethan-Weichschaumstoffe als Polstermaterial.

Für die Durchführung des erfindungsgemäßen Verfahrens werden verwendet:
a) Als Ausgagskomponenten aliphatische, cycloaliphatische, araliphatische, aromatische und heterocyclische Polyisocyanate, wie sie z.B. von W. Siefken in Justus Liebigs Annalen der Chemie, 362, Seiten 75 bis 136, beschrieben werden beispielsweise solche der Formel

   Q(NCO)ₙ

   in der
   - n: = 2 bis 5, vorzugsweise 2 bis 3 und
   - Q: = einen aliphatischen Kohlenwasserstoffrest mit 2 bis 18, vorzugsweise 6 bis 10 C-Atomen,
   einen cycloaliphatischen Kohlenwasserstoffrest mit 4 bis 5, vorzugsweise 5 bis 10 C-Atomen,
   einen aromatischen Kohlenwasserstoffrest mit 6 bis 15, vorzugsweise 6 bis 13 C-Atomen bedeuten, z.B. solche Polyisocyanate, wie sie in der DE-A-2 832 253, Seiten 10 bis 11, beschrieben werden.

Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI").

Bevorzugt ist auch die Verwendung von monomeren und polymeren Diphenylmethandiisocyanaten bzw. deren Abmischung mit TDI.
b1) Ausgangskomponenten sind ferner mindestens zwei aktive Wasserstoffatome, vorzugsweise primäre Hydroxylgruppen, aufweisende Polyether, in der Regel auf Basis von Propylenoxid oder Propylenoxid/Ethylenoxid-Gemischen, mit einem Molekulargewicht von 400 bis 10000 ("Polyolkomponente). Diese Polyether können anteilig noch andere Alkylenoxidreste enthalten. Es handelt sich hierbei um an sich bekannte, höhermolekulare Polyether.
b2) Anteilig (bis zu 50 Gew.-%) können in der Komponente b) ferner die an sich bekannten "polymermodifizierten" Polyetherpolyole mitverwendet werden. Bevorzugt sind Dispersionen von Polymeren enthaltenden höhermolekularen Hydroxylpolyethern, die durch Umsetzung von Mono- und/oder Polyisocyanaten mit primäre und/oder sekundäre Aminogruppen aufweisenden Polyaminen und/oder Hydrazinen und/oder Hydraziden und/oder Alkanolaminen in einem 1 bis 8 primäre und/oder sekundäre Hydroxylgruppen aufweisenden Polyether mit einem Molekulargewicht von 400 bis 10 000 hergestellt worden sind.
   Derartige Dispersionen von Polymeren enthaltenden höhermolekularen Hydroxylpolyethern sind z.B. aus DE-A-2 519 004, DE-A-2 550 796, DE-A-2 550 797, DE-A-2 550 833, DE-A-2 550 862, DE-A-2 638 759, DE-A-2 639 254,US-A-4 374 209, EP-A-0 079 115 und US-A-4 381 351 bekannt.
   In Frage kommen ferner Dispersionen von Reaktionsprodukten von Polyisocyanaten und Alkanolaminen in Polyethern (vgl. z.B. DE-A-3 103 757) und Dispersionen von Homo- oder Copolymerisaten von ungesättigten Monomeren wie Styrol oder Acrylnitril in Polyethern (sog. "Polymer-Polyole").
c) Erfindungsgemäß wird die wäßrige Lösung eines
   I) Alkanolamins und eines
   II) aminfreien Polyols
   bevorzugt im Mischungsverhältnis 1:1 als Treibmittel und Vernetzer eingesetzt, wobei vorzugsweise die Dispergierung durch Eindüsen der wäßrigen Lösung in den Polyolstrom (Komponente b)) unter Hochdruckbedingungen vorgenommen wird.
   Erfindungsgemäß kommen z.B. als Alkanolamine I) Diethanolamin, Triethanolamin, Diisopropanolamin, Triisopropanolamin, Hydroxyethyl-hydroxypropylamin, in Frage. Beispiele für die Vernetzerkomponente II) sind Glycerin, Pentaerythrit, Sorbit, Mannit sowie Dulcit. Das aminfreie Polyol II) ist in der Regel ethergruppenfrei und weist in der Regel eine OH-Zahl von 500-2000 auf.
   Diese Verbindungen I) und II) weisen in der Regel 2 bis 8, vorzugsweise 2 bis 4, gegenüber Isocyanaten reaktionsfähige Wasserstoffatome auf. Weitere Beispiele hierfür werden z.B. in der DE-A-2 832 253, Seiten 19-20, beschrieben.
d) Gegebenenfalls werden organische Treibmittel und amininische bzw. metallorganische Katalysatoren, wie sie an sich bekannt sind, vorzugsweise organische Sn(II)- und/oder Sn(IV)-Verbindungen, insbesondere Sn(II)-Salze höherer Carbonsäuren, mitverwendet.
e) Ferner werden gegebenenfalls oberflächenaktive und flammhemmende Zusatzstoffe und weitere an sich bekannte Hilfsmittel mitverwendet, z.B. Emulgatoren und Schaumstabilisatoren,Reaktionsverzögerer, Zellregler der an sich bekannten Art wie Paraffine oder Fettalkohole oder Dimethylpolysiloxane sowie Pigmente oder Farbstoffe und Flammschutzmittel der an sich bekannten Art, z.B. Tris-chlorethylphosphat, Trikresylphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß- oder Schlämmkreide.

Weitere Beispiele von gegebenenfalls erfindungsgemäß mitzuverwendenden oberflächenaktiven Zusatzsoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113, beschrieben.

Durchführung des erfindungsgemäßen Verfahrens:
Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtung bedient, z.B. solcher, die in der US-A-2 764 565 beschrieben werden. Einzelheiten über Verarbeitungseinrichtungen, die auch erfindungsgemäß infrage kommen, werden im Kunststoff-Handbuch, Band VII, herausgegeben von Vieweg und Höchtlen, Carl-Hanser-Verlag, München 1966, z.B. auf den Seiten 121 bis 205 beschrieben.

Die Verwendung einer wäßrigen Lösung der Vernetzerkomponenten I) und II) hat sich für die Herstellung von weichen Schaumstofftypen als wichtig erwiesen. Werden nämlich die Vernetzerkomponenten I) und II) getrennt, das heißt in jeweils separatem Strom der Mischkammer zugeführt, so resultiert ein instabiles Schaumgemisch, das nach kurzer Zeit kollabiert. Ein instabiles Schaumgemisch wird auch dann erhalten, wenn die wäßrige Lösung nicht ausreichend im Polyolstrom dispergiert ist. Die Verwendung einer Lösung der Vernetzergemische erlaubt es daher, weiche Schaumstoffe durch stark abgesenkten Füllstoffanteil, der normalerweise zur Stabilisierung erforderlich ist, mit Wasser als alleinigem Treibmittel bei äußerst sicherem Processing, d.h. genügendem Spielraum zwischen Schrumpf und Kollaps, herzustellen.

Die erfindungsgemäß erhältlichen Polyurethan-Weichschaumstoffe weisen in der Regel Rohdichten zwischen 15-35 kg/m³, vorzugsweise zwischen 18-30 kg/m³ auf. Sie werden bevorzugt als Polstermaterialien verwendet.

### Ausführungsbeispiele

Für die Herstellung der Polyurethanschaumstoffe werden nach bekannter Reaktionstechnik umgesetzt (die angegebenen Teile sind Gew.-Teile):

### Beispiel 1

80 Teile Polyether mit a 50% an primären OH-Gruppen der OH-Zahl 35 auf Basis von Trimethylolpropan, Propylenoxid, Ethylenoxid
20 Teile einer 20%igen Dispersion eines Polyharnstoffs aus Hydrazin und Toluylendiisocyanat in einem aktiven Polyether aus Trimethylolpropan, Propylenoxid, Ethylenoxid der OH-Zahl 30 sowie
7,5 Teile des Vernetzergemisches I/II mit Aktivator aus 5,0 Tle. Wasser, 1,2 Tle. Diethanolamin, 1,2 Tle. Sorbit, 0,1 Tle. Dabco® 33LV der Houdry Hüls
0,5 Teile Stabilisator KS 67 der Bayer AG auf der Basis eines kurzkettig polyethermodifizierten Silicons
0,1 Teile Zinnethylhexoat
51,0 Teile Toluylendiisocyanat (TDI 80) aus 80% 2,4- und 20% 2,6-Isomeren
Kennzahl 85
Es resultiert ein hochelastischer Schaumstoff, der durch das übliche leichte Aufdrücken membranfrei erhalten werden kann.
Rohdichte: 20 kg m⁻³
Stauchhärte: 1,0 kPa bei 40% Verformung
Druckverformungsrest: 10% bei 90% Verformung
Eine solche Härte läßt sich sonst nur durch Mitverwendung von ca. 17 Tle. Fluortrichlormethan in üblichen Rezepturen herstellen.

### Beispiel 2 (Vergleichsbeispiel mit getrennter Vernetzerdosierung)

80 Teile Polyether gemäß Beispiel 1
20 Teile Polyetherdispersion gemäß Beispiel 1
1,2 Teile Diethanolamin (Vernetzer 1)
1,5 Teile einer 80%igen wäßrigen Lösung von Sorbit (Vernetzer II)
4,7 Teile Wasser
0,1 Teile Aktivator Dabco® 33LV der Houdry Hüls
0,1 Teile Zinnethylhexoat
0,5 Teile Stabilisator gemäß Beispiel 1
51,0 Teile Toluylendiisocyanat (TDI 80) aus 80% 2,4- und 20% 2,6-Isomeren
Kennzahl 85
Der Schaum bricht während der Aufsteigphase wegen ungenügender Stabilität zusammen.

### Beispiel 3

80 Teile Polyether gemäß Beispiel 1
20 Teile Polyetherdispersion gemäß Beispiel 1
6,4 Teile des Vernetzergemisches I/II mit Aktivator aus 3,9 Tle. Wasser, 1,2 Tle. Diethanolamin, 1,2 Tle. Sorbit und 0,1 Tle. Dabco® 33LV der Houdry Hüls
0,5 Teile Stabilisator gemäß Beispiel 1
0,1 Teile Zinnethylhexoat
41,5 Teile Toluylendiisocyanat (TDI 80) aus 80% 2,4- und 20% 2,6-Isomeren
Kennzahl 85
Es resultiert ein hochelastischer Schaumstoff, der durch das übliche leichte Aufdrücken membranfrei erhalten werden kann.
Rohdichte: 25 kg m⁻³
Stauchhärte: 1,2 kPa
Druckverformungsrest: 6%
Eine solche Härte läßt sich in üblichen Rezepturen durch Mitverwendung von ca. 14 Tle. Fluortrichlormethan erreichen.

### Beispiel 4 (Vergleichsbeispiel mit getrennter Vernetzerdosierung)

80 Teile Polyol gemäß Beispiel 1
20 Teile Polyoldispersion gemäß Beispiel 1
1,2 Teile Diethanolamin (Vernetzer I)
1,5 Teile einer 80%igen wäßrigen Lösung von Sorbit (Vernetzer II)
3,6 Teile Wasser
0,1 Teile Dabco® 33LV gemäß Beispiel 1
0,1 Teile Zinnethylhexoat
0,5 Teile Stabilisator gemäß Beispiel 1
41,5 Teile Toluylendiisocyanat (TDI) 80 aus 80% 2,4- und 20% 2,6-Isomeren
Kennzahl 85
Der Schaum bricht während der Aufsteigphase wegen ungenügender Stabilität zusammen.

### Beispiel 5

80 Teile Polyol gemäß Beispiel 1
20 Teile der Polyoldispersion gemäß Beispiel 1
6,0 Teile des Vernetzergemisches I/II mit Aktivator aus 3,9 Tle. Wasser, 1,0 Tle. Diethanolamin, 1,0 Tle. Sorbit und 0,1 Tle. Dabco® 33LV
0,5 Teile Stabilisator gemäß Beispiel 1
0,1 Teile Zinnethylhexoat
47,5 Teile Toluylendiisocyanat (TDI 80) aus 80% 2,4- und 20% 2,6-Isomeren
Kennzahl 100
Es resultiert ein hochelastischer Schaumstoff, der durch das übliche leichte Aufdrücken membranfrei erhalten werden kann.
Rohdichte: 24 kg m⁻³
Stauchhärte: 1,7 kPa
Druckverformungsrest: 6%
Eine solche Harte läßt sich mit üblichen Rezepturen nur durch Mitverwendung von ca. 8 Tle. Fluortrichlormethan erreichen.

### Beispiel 6 (Vergleich mit getrennter Vernetzerdosierung)

80 Teile Polyol gemäß Beispiel 1
20 Teile der Polyoldispersion gemäß Beispiel 1
1,0 Teile Diethanolamin (Vernetzer I)
1,25 Teile einer 80%igen wäßrigen Lösung von Sorbit (Vernetzer I)
3,65 Teile Wasser
0,1 Teile Dabco® 33LV gemäß Beispiel 1
0,5 Teile Stabilisator gemäß Beispiel 1
47,5 Teile Toluylendiisocyanat (TDI 80) aus 80% 2,4-und 20% 2,6-Isomeren
Kennzahl 100
Der Schaum bricht während der Aufsteigphase wegen mangelnder Stabilität zusammen.

## Patentansprüche

1. Verfahren zur Herstellung von hochelastischen Polyurethan-Weichschaumstoffen durch Umsetzung von
a) Polyisocyanaten mit
b1) mindestens zwei gegenüber Isocyanaten aktive Wasserstoffatome aufweisenden Polyethern vom Molekulargewicht 400 bis 10 000,
und gegebenenfalls
b2) bis 50 Gew.-%, bezogen auf (b1 + b2), polymermodifizierten Polyolen ausgewählt aus
b2.1) Dispersionen von Polymere enthaltenden höhermolekularen Hydroxylverbindungen, die durch Umsetzung von Mono- und/oder Polyisocyanaten mit primäre und/oder sekundäre Aminogruppen aufweisenden Polyaminen und/oder Hydrazinen und/oder Hydrazinen und/oder Alkanolaminen in einer 1 bis 8 primäre und/oder sekundäre Hydroxylgruppen aufweisenden Verbindung mit einem Molekulargewicht von 400 bis 10 000 hergestellt worden sind,
b2.2) Dispersionen von Reaktionsprodukten von Polyisocyanaten und Alkanolaminen in Polyethern,
b2.3) Dispersionen von Homo- oder Copolymerisaten von ungesättigten Monomeren wie Styrol oder Acrylnitril in Polyethern
wobei der Füllstoffanteil von b2), bezogen auf (b1 + b2), 1 bis 6 Gew.-% beträgt,
in Gegenwart von
c) Wasser und
d) Verbindungen mit mindestens zwei gegenüber Isocyanaten reaktionsfähigen Wasserstoffatomen mit einem Molekulargewicht von 32 bis 399 als Vernetzer und gegebenenfalls
e) Katalysatoren sowie gegebenenfalls in Gegenwart von
f) an sich bekannten oberflächenaktiven und flammhemmenden Zusatzstoffen und weiteren an sich bekannten Hilfsmittels,
dadurch gekennzeichnet,
daß als Treibmittel c) und Vernetzer d) eine wäßrige Lösung eines I.) Alkanolamins und eines II.) aminfreien Polyols verwendet wird.

2. Verfahren nach Anspruch 1, dadurch gekennzeichnet, daß als Vernetzerkomponente I) Diethanolamin verwendet wird.

3. Verfahren nach Anspruch 1, dadurch gekennzeichnet, daß als Vernetzerkomponente II) Sorbit verwendet wird.

4. Verfahren nach Anspruch 1 bis 3, dadurch gekennzeichnet, daß die Vernetzer I) und II) gemeinsam, vorzugsweise unter Hochdruck in das Reaktionsgemisch appliziert werden.

5. Verfahren nach Anspruch 1 bis 4, dadurch gekennzeichnet, daß im Kennzahlbereich 70 bis 110, bevorzugt 80 bis 100, gearbeitet wird.

6. Verfahren nach Anspruch 1 bis 5, dadurch gekennzeichnet, daß die Vernetzerkomponente I) in Mengen von 0,2 bis 5,0 Gew.-Tln. (bezogen auf 100 Gew.-Tle. der Komponente b)) und die Vernetzerkomponente II) in Mengen von 0,2-5,0 Gew.-Tln. (bezogen auf 100 Gew.-Tle. der Komponente b)) als gemeinsame wäßrige Lösung verwendet wird.

7. Verwendung der hochelastischen Polyurethan-Weichschaumstoffe gemäß Anspruch 1 bis 6 als Polstermaterial.

## Claims

1. Process for the production of highly resilient flexible polyurethane foams by reacting
a) polyisocyanates with
b1) at least two polyethers in the molecular weight range from 400 to 10,000 having isocyanate reactive hydrogen atoms,
and optionally
b2) up to 50 wt.%, related to (b1 + b2) of polymer modified polyols selected from
b2.1) dispersions of relatively high molecular weight hydroxyl compounds containing polymers, which hydroxyl compounds were produced by reacting mono- and/or polyisocyanates with polyamines and/or hydrazines and/or hydrazides and/or alkanolamines having primary and/or secondary amino groups to yield a compound having 1 to 8 primary and/or secondary hydroxyl groups with a molecular weight of 400 to 10,000,
b2.2) dispersions of reaction products of polyisocyanates and alkanolamines in polyethers,
b2.3) dispersions of homo- or copolymers of unsaturated monomers such as styrene or acrylonitrile in polyethers,
wherein the filler content of b2), related to (b1 + b2), is 1 to 6 wt.%,
in the presence of
c) water and
d) compounds in the molecular weight range from 32 to 399 having at least two isocyanate reactive hydrogen atoms as crosslinking agents and optionally
e) catalysts and also optionally in the presence of
f) *per se* known surface-active and flame-retardant additives and further *per se* known auxiliaries,
characterised in that
an aqueous solution of I) an alkanolamine and II) an amine-free polyol is used as the blowing agent c) and crosslinking agent d).

2. Process according to claim 1, characterised in that diethanolamine is used as crosslinking component I).

3. Process according to claim 1, characterised in that sorbitol is used as crosslinking component II).

4. Process according to claims 1 to 3, characterised in that the crosslinking agents I) and II) are introduced together into the reaction mixture, preferably under elevated pressure.

5. Process according to claims 1 to 4, characterised in that the process is performed in the index range from 70 to 110, preferably from 80 to 100.

6. Process according to claims 1 to 5, characterised in that the crosslinking component I) is used in quantities of from 0.2 to 5.0 parts by weight (related to 100 parts by weight of component b)) and crosslinking component II) in quantities of 0.2-5.0 parts by weight (related to 100 parts by weight of component b)) as a common aqueous solution.

7. Use of the highly resilient flexible polyurethane foams according to claims 1 to 6 as upholstery material.

## Revendications

1. Procédé de préparation de mousses souples de polyuréthannes à haute élasticité par réaction de
a) des polyisocyanates avec
b1) des polyéthers contenant au moins deux atomes d'hydrogène actifs à l'égard des isocyanates et ayant un poids moléculaire de 400 à 10 000, et le cas échéant,
b2) jusqu'à 50 % en poids, par rapport à (b1 + b2) de polyols à modification polymère choisis parmi
b2.1) des dispersions de composés hydroxylés à haut poids moléculaire contenant des polymères, qui ont été préparées par réaction de mono- et/ou de poly-isocyanates avec des polyamines portant des groupes amino primaires et/ou secondaires et/ou des hydrazines et/ou des hydrazides et/ou des alcanolamines dans un composé contenant 1 à 8 groupes hydroxy primaires et/ou secondaires et ayant un poids moléculaire de 400 à 10 000,
b2.2) des dispersions de produits de réaction de polyisocyanates et d'alcanolamines dans des polyéthers,
b2.3) des dispersions d'homo- ou copolymères de monomères insaturés tels que le styrène ou l'acrylonitrile dans des polyéthers, la proportion des matières de charge de b2), par rapport à (b1 + b2), allant de 1 à 6 % en poids,
en présence de
c) de l'eau et
d) des composés contenant au moins deux atomes d'hydrogène réactifs avec les isocyanates et ayant un poids moléculaire de 32 à 399, en tant qu'agents réticulants, et le cas échéant
e) des catalyseurs, éventuellement en présence de
f) des additifs tensioactifs et ignifugeants connus en soi et d'aurtres produits auxiliaires connus en soi,
ce procédé se caractérisant en ce que
on utilise en tant qu'agent porogène c) et agent réticulant d), une solution aqueuse de I) une alcanolamine et II) un polyol exempt de groupes amino.

2. Procédé selon revendication 1, caractérisé en ce que l'on utilise en tant que composant réticulant I) la diéthanolamine.

3. Procédé selon revendication 1, caractérisé en ce que l'on utilise en tant que composant réticulant II) le sorbitol.

4. procédé selon les revendications 1 à 3, caractérisé en ce que l'on introduit les agents réticulants I) et II) ensemble, de préférence sous forte pression, dans le mélange de réaction.

5. Procédé selon les revendications 1 à 4, caractérisé en ce que l'on opère dans l'intervalle des indices de 70 à 110, de préférence de 80 à 100.

6. Procédé selon les revendications 1 à 5, caractérisé en ce que l'on utilise, sous forme d'une solution aqueuse commune, le composant réticulant I) en quantité de 0,2 à 5,0 parties en poids (pour 100 parties en poids du composant b) et le composant réticulant II) en quantité de 0,2 à 5,0 parties en poids (pour 100 parties en poids du composant b).

7. Utilisation des mousses souples de polyuréthannes à haute élasticité selon les revendications 1 à 6 en tant que matières de capitonnage.
